# EUROPEAN PATENT APPLICATION

(11) **EP 1 431 329 A1**
(43) Date of publication of application: **23.06.2004**
(21) Application number: 02028461.8
(22) Date of filing: 19.12.2002
(51) Int. Cl.: C08G 75/28

(54) **Compositions containing volume expanding cyclic thiocarbonates**

(71) Applicant: Henkel Kommanditgesellschaft auf Aktien, 40589 Düsseldorf-Holthausen (DE)
(72) Inventor: Huver, Thomas, Dr., 40625 Düsseldorf (DE); Meier, Frank, Dr., 40589 Düsseldorf (DE); Schönfeld, Rainer, Dr., New Berlin, WI 53151 (US); Endo, Takeshi, Prof. Dr., Yonezawa, Yamagata 992-8510 (JP)

(57) **Abstract**

The invention relates to curable compositions, such as adhesives, sealants or coatings, containing monomers having at least one thiocarbonate or dithiocarbonate group as a polymerizable functional group, a method for the preparation of such compositions and their use.

## Description

The invention relates to curable compositions, such as adhesives, sealants or coatings, containing monomers having at least one thiocarbonate or dithiocarbonate group as a polymerizable functional group, a method for the preparation of such compositions and their use.

Common vinyl monomers such as styrene and methyl methacrylate undergo polymerization with volume shrinkage. Thermosetting resins such as epoxides also show a 4-5% volume shrinkage during the curing process. The occurrence of the volume shrinkage of the monomers and resins induces serious problems in their industrial applications for composites, adhesives, coatings, precision castings, and sealant materials.

Cyclic carbonates undergo cationic and anionic ring-opening polymerization accompanying volume expansion, which can be accounted for by difference in strength of intermolecular interaction between monomers and polymers. For example, a six-membered cyclic carbonate bearing norbornene moiety underwent volume expansion by 8.2 % during anionic polymerization. On the other hand, sulfur-containing polymers are gaining importance due to their excellent optical and thermal properties.

The shrinkage during polymerization of many types of monomers makes those monomers generally not suitable for use in numerous applications, including their use as strain-free composites, high-strength adhesives, and precision castings. As an example, when such monomers are used in composites which include high-strength fibers, the polymeric matrix is subject to failure when the polymer shrinks and pulls away from the fibers. Failure of the composite can also occur when the matrix ruptures as a result of voids or microcracks which are formed in the matrix during polymerization shrinkage.

Such a behavior can be detrimental with regard to the use of such polymers in many applications, especially in the field of adhesives. Shrinkage of polymers in adhesive systems can be the cause for a number of failures of the adhesive bond between substrates which are mainly related to the weakening of the contact between the substrate and the adhesive due to shrinkage of the adhesive itself. As a result of the contraction of the adhesive polymers microruptures can occur, which lead to a decrease in bond strength between the adhesive and the substrate and often cause adhesive failure as a result of pulling or shearing forces on the substrates.

However, the above mentioned microruptures are also a source of long term failures due to corrosive environments the adhesively bond substrates are subjected to. Especially in the automotive and aerospace industries, adhesive bonding of plane or vehicle parts has become favored over mechanical fastening of parts, due to the fast and flexible use of adhesives and due to the comparatively low weight of an adhesive bond as compared to parts fastened by mechanical means. It has, however, been noticed that bond strength, while comparatively strong immediately after curing of the adhesive, can decrease to a dangerous low level after prolonged storage or use of the bonded parts, especially under often corrosive environmental conditions. Almost every type of vehicle or airplane is subjected to drastic changes in temperature and to humid environments, which can be corrosive due to their salt content. While temperature changes can increase the already present microruptures, salt loaded liquids can enter the ruptures and can immediately begin their destructive work basically undisturbed and unnoticed. This leads after a comparatively short time to a weakening of the joint and/or the substrate which can cause failure of the bond or the substrate.

Shrinkage of adhesives, however, is also undesirable when the bonding of thin material is concerned. Often shrinkage of adhesives leads to wrinkles in bonded thin substrates, which usually result in unfavorable product features.

In the past it has been described that spiroorthocarbonates undergo reduced polymerization contraction. This has led to the suggestion of their use in reinforced composites. Spiroorthocarbonates are esters of orthocarboxylic acid and have four oxygen atoms bonded to a single carbon atom, with the carbon atom being common to two ring systems. The expansion of the spiroorthocarbonates on polymerization is attributed to a double spiro-cyclic ring opening of the spiroorthocarbonates, resulting in the breaking of two covalent bonds to form one new bond.

In US-A 6,022,940 copolymer compositions are described, including compositions which undergo less than .±.1.0% bulk polymerization shrinkage and are described to be useful as strain-free composites, high-strength adhesives, and precision castings. The copolymer compositions are formed from the cationic initiated polymerization of alicyclic spiroorthocarbonate monomers and epoxy resin monomers or comonomers. A preferred spiroorthocarbonate monomer is 2,3,8,9-di(tetramethylene)-1,5,7,11-tetraoxaspiro-[5,5]undecane. A preferred epoxy resin is a three component epoxy comonomer mixture of (i) diglycidyl ether of bisphenol A, (ii) 3,4-epoxycyclohexanemethyl-3,4-epoxycyclohexane carboxylate, and (iii) vinyl cyclohexene dioxide, preferably in a ratio of 5:4:1 by weight. Such spiroorthocarbonate monomer containing compositions, however, still are unsatisfactory regarding their long term bonding stability in adhesive compositions in corrosive environments.

In "Expanding Monomers, Synthesis, Characterization and Applications", edited by R. K. Sadhir and R. M. Luck, CRC Press, 1992, pp. 142 - 144, Takata and Endo describe the anionic and cationic polymerization of cyclic carbonates. They report volume expansions of 4,0 to 7,2 %. The use of such monomers in adhesive systems, however, is not described.

In US-A 6,160,044, Jimbo et al. disclose compositions containing dithiocarbonate compounds. No information, however, is given about a volume change during the polymerization.

Nemoto, Sanda and Endo describe the controlled cationic ring opening polymerization of monothiocarbonates in "Macromolecules", 2000, 33, 7229 - 7231. No information, however, about a change in volume is given.

In "Prog. Polym. Sci.", Vol. 18, 1993, 865 - 868, Takata and Endo describe the anionic and cationic polymerization of cyclic carbonates.

In "Journal of Applied Polymer Science", Vol. 69, 1998, 451 - 460, K. Pielichowski, P. Czub and P. Pielichowski describe a series of curing reactions of epoxides and different substituted (1,3-oxothiolane-2-thione)s with hexahydrophthalic anhydride in the presence of 2,4,6-tri(dimethylaminomethyl)phenol. The thermal stability of the polymers obtained with thiones was found to be better than the thermal stability of the corresponding epoxides. A volume effect was not mentioned.

The above mentioned systems suffer from a number of disadvantages. For many of the above described compounds, the volume expansion on polymerization is too small for an effective use. Furthermore, many of the compounds are difficult to synthesize and thus are disadvantageous from an economical and ecological point of view. Many of the above mentioned compounds also suffer from thermal instability at higher temperatures which restrict the use of such compounds and polymers prepared from them in thermally demanding applications. Most of the compounds themselves are unsatisfactory as adhesives, sealants or coatings due to their above mentioned characteristics and due to the difficult and often expensive synthetic routes leading to the desired compounds.

There has thus been a desire for compositions which can, e.g., be used as adhesives, sealants or coatings, which do not suffer from the deficiencies of compositions known from the prior art.

It has thus been an object of the present invention to provide a curable composition, which has a higher bulk volume and thus a lower bulk density than the monomers it is prepared from. It has been a further object of the invention to provide a method for the preparation of such compositions.

The above mentioned problems are solved by compositions as well as by the methods as described in this text.

It has now been found that compositions, containing epoxides, nucleophiles and six-membered cyclic thiocarbonate derivatives like 5,5-(bicyclo[2.2.1]hept-2-en-5,5-ylidene)-1,3-dioxane-2-thione (1) and 5,5-(bicyclo[2.2.1]heptan-5,5-ylidene)-1,3-dioxane-2-thione (2) show a volume expansion during polymerization and lead to adhesives, sealants or coatings which save surprisingly improved properties with regard to stability of bonding between substrate and adhesive, sealant or coating as compared to compositions known from the prior art.

In a first aspect, the present invention thus relates to compositions, containing at least one epoxide, at least one nucleophile and at least one monomer of the general formula I 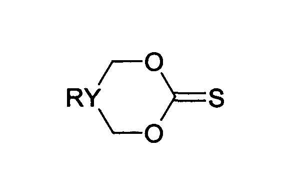 where RY is a substituted or unsubstituted mono- or polycyclic saturated or unsaturated or aromatic hydrocarbon and Y is a spiro carbon atom being part of the mono- or polycyclic hydrocarbon structure, or a mixture of two or more different monomers of the general formula I.

In a second aspect, the present invention relates to a method for the preparation of a polymer, wherein a composition containing at least one epoxide, at least one nucleophile and at least one monomer according to the general formula I 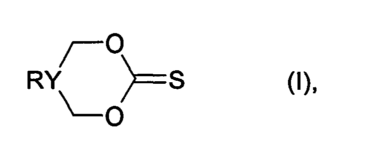 where RY is a substituted or unsubstituted mono- or polycyclic saturated or unsaturated or aromatic hydrocarbon and Y is a spiro carbon atom being part of the mono- or polycyclic hydrocarbon structure, or a mixture of two or more monomers according to the general formula I, is anionically or cationically polymerized.

In the course of studies on ring-opening polymerization of cyclic carbarmates, a sulfur analogue of cyclic carbonates, i.e., cyclic thiocarbonate, was designed, which exhibits a unique reactivity. Anionic ring-opening polymerization of 1,1-oxathian-2-one proceeds via selective ring-opening with C-S bond cleavage to afford polythiocarbonate. Cationic ring-opening polymerization of 5,5-diormethyl-1,3-dioxene-2-thione proceeds accompanying isomerization of thiocarbonate group via a living process to also afford polythiocarbonate.

It has, however, been discovered that the beneficiary features of these monomers in terms of expansion during polymerization can not only be utilized in homopolymers but also are helpful in developing curable compositions, which serve, e.g., as adhesives, sealants or coatings, basically without impairing the fundamental properties of the compositions but adding technical value.

Generally, the compositions according to the first aspect of the present invention are containing monomers according to the general formula I 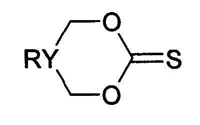 where RY is a substituted or unsubstituted mono- or polycyclic saturated or unsaturated or aromatic hydrocarbon or heterocyclic structure and Y is a spiro carbon atom being part of the mono- or polycyclic hydrocarbon or heterocyclic structure.

According to the present invention, the spiro carbon atom of a compound according to the general formula I can be part of different types of cyclic structures which can be substituted, unsubstituted, saturated or unsaturated.

Examples for RY according to the general formula I are norbornene, norbornane, adamantine.

It can be a preferred option to employ compounds according to the general formula I in compositions according to the present invention, which have an unsubstituted hydrocarbon moiety RY.

In the context of the present invention, the term "substituent" means a functional group bearing at least one hetero atom selected from the group consisting of O, S, N or P. A heterocyclic moiety RY according to the general formula I can be, depending on the reactivity of the hereroatom under the given circumstances, classified as a "substituted" moiety or an unsubstituted moiety.

It is, thus, also within the context of the present invention, to employ compounds according to the general formula I for the preparation of compositions and polymer mixtures according to the present invention, which bear a substituent at the moiety RY. Generally all types of substituents are applicable in the present invention. Functional groups can be OH, NH₂, NHR', COOH, COH, C=O, SiX₃ with X being O-C₁₋₄-Alk(en)yl, P(O)(OH)₂ or any other type of functional groups which allow a chemical modification of the compound according to the general formula I at this functional group without destroying the thiocarbonate ring.

In a preferred embodiment of the present invention, the compound according to the general formula I carries a polycyclic ring system as a moiety RY, especially norbornene or norbornane.

According to the present invention, for developing a new adhesive, sealant or coating system with volume-expansion, the six-membered cyclic thiocarbonate derivatives 5,5-(bicyclo[2.2.1]hept-2-en-5,5-ylidene)-1,3-dioxane-2-thione (1) and 5,5-(bicyclo[2.2.1]heptan-5,5-ylidene)-1,3-dioxane-2-thione (2) were employed. Both systems are able to be homopolymerized by anionic or cationic initiation.

Scheme 1 exemplifies the anionic homopolymerization of the latter monomers.

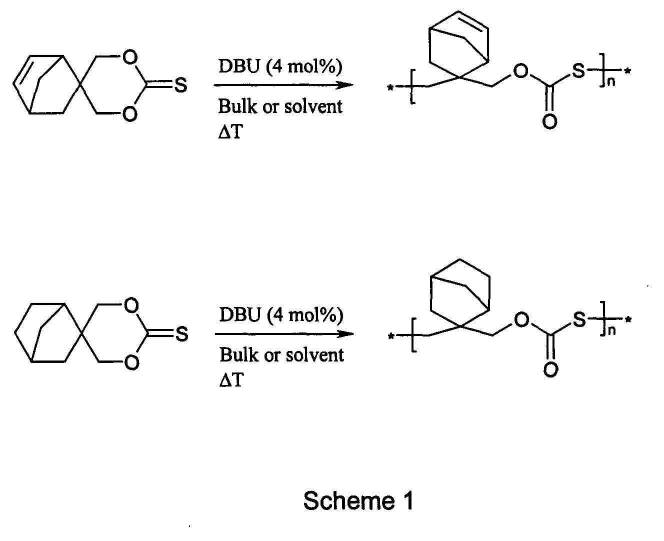

In a composition according to the present invention, without intending to be bound by any theory, it seems that the homopolymerization as described above, is not the predominant reaction consuming the monomers according to the general formula I, but the monomers are mainly incorporated into the polymer backbone of the reaction product of the epoxide and the amine. It is, however, also within the context of the present invention, that the polymerization of a composition according to the present invention results at least partly in mixtures of different homopolymers and copolymers.

It has been found that polymers available from compositions according to the present invention, exhibit an unexpected large increase in volume during their formation from a corresponding monomer mixture as compared to the corresponding monomer mixture itself. Generally, the volume increase is about 2.5 % or more, especially more than 2.8, 3.0, 3.5, 4.0, 4.5, 5.0, 5.5 or 6.0 %.

Generally, a composition according to the present invention, besides the compound according to the general formula I or a mixture of two or more of such compounds, contains at least two monomers A and B which are polymerizable by polyaddition. It is within the scope of the present invention to supply compositions, which can basically be adapted to any combination of monomers A and B and monomers according to the general formula I. It is, however, a preferred option of the present invention, to supply such compositions, which contain monomers polymerizable essentially under the same or at least similar conditions in order to simplify the polymerization process.

A composition according to the present invention thus contains at least one monomer of the type A, which is in itself able to be polymerized by a polymerization reaction of the polyaddition type such as epoxides, aziridines, dithiocarbonates, or thiiranes (episulfides).

In a preferred option according to the present invention, a composition according to the present invention contains at least one epoxide. Epoxides are polymerizable either anionically or cationically with suitable initiators and catalysts. Suitable conditions are known to the skilled person.

Monomers, which do not fall under the general formula I but can be polymerized under similar conditions and together with the above mentioned monomers as monomers according to the general formula I are e.g. epoxides, aziridines, isocyanates or thiiranes.

It has, however, been found that the use of epoxides as comonomers of the type A together with monomers according to the general formula I results in copolymers which have superior characteristics in terms of shrink control, adhesion under corrosive stress and thermal stability.

Suitable monomers of the type A can have one or more functional groups which take part in the polyaddition reaction, e.g., two, three, four, five or more of such functional groups. It is within the scope of the present invention that the number of functional groups is not a natural number, but can be fractional, e.g. 1.9, 2.1, 2.2, 2.3, 2.4, 2.5 or more, corresponding to an average value of a mixture of compounds with a different number of respective functional groups. In a preferred embodiment of the present invention, the number of functional groups of a compound according to monomer type A is about 1.8 to 2.5 or about 2.5 to 4.0, especially 1.9 to 2.1 or 2.8 to 4.0.

An epoxy comonomer can be a low molecular weight compound (with a molecular weight of up to e.g. 200) or a, epoxy functional prepolymer with a molecular weight of up to 10000 . It can be mono- or multifunctional and is usually chosen to provide a low to medium viscosity fluid or pasty reaction mass in which the compounds according to the general formula I as described above are soluble or at least dispersible, including at loading concentrations of up to or exceeding 90 % by weight.

A suitable epoxy resin can e.g. be designed to cure rapidly at ambient temperature. As a general rule, an average epoxy value (defined as the number of epoxy groups per 100 grams of epoxy resin) of greater than 0.5 is necessary to achieve a rapid ambient cure.

Examples for suitable epoxides are glycidyl-1-naphthyl-ether, diglycidyl ether of bisphenol A, diglycidyl ether of bisphenol F, diglycidyl ether of bisphenol S, 3,4-epoxycyclohexanemethyl-3,4-epoxycyclohexane carboxylate or vinyl cyclohexene dioxide.

Suitable diglycidyl ethers of bisphenol A epoxy monomer have an epoxy equivalent of 185, a viscosity of 5000-6000 centipoises, and are commercially available from Vantico under the brand designation 6004.

The 3,4-epoxycyclohexanemethyl-3,4-epoxycyclohexane carboxylate epoxy monomers have an epoxy equivalent of 133 and a viscosity of 350-450 centipoises and are available from Union Carbide under the brand designation ERL 4221.

The vinyl cyclohexene dioxide epoxy monomer has an epoxy equivalent of 76, a viscosity of 20 centipoises and is available from Ciba Geigy under the brand designation RD-4. Further epoxy compounds are D.E.R. 331 (Dow Chemicals), Ruetapox 0164 (Fa. Bakelite) or Epon 828 (Fa. Resolution). Also usable is MY 720 (Fa. Vantico)

According to a further embodiment of the present invention, a composition according to the present invention not only contains a compound according to the general formula I or a mixture of two or more of such monomers and a monomer of the type A or a mixture of two or more of such monomers, but also a monomer of the type B, which is polymerizable together with a monomer of the type A in a polyaddition reaction.

Usually, all nucleophiles which are able to either open the ring of an epoxide under polymerization conditions or are able to be polymerized together with an epoxide in a polyaddition reaction with the aid of suitable starters, catalysts and the like. Preferred nucleophiles are compounds having a OH-, NH₂-, NHR- or SH-Group. Especially preferred are, however, compounds having one or more NH₂-Groups.

The number of functional groups in monomers of the type B is essentially dependant on the intended chemical and mechanical properties of the resulting polymer or polymer mixture. It has, however, been found that the number of functional groups in the type B monomer should be in the range of about 1.5 to 3, especially in the range of about 1.8 to 2.5 or 1.9 to 2.1. In a further preferred embodiment of the present invention, the number of functional groups in monomers of the type B should be essentially the same as in the monomers of the type A, e.g., 1,8 to 2.2.

Especially suitable monomers of the type B are polyols like polyetherpolyols or polyesterpolyols, polymercaptanes or polyamines, where the latter are preferred in compounds according to the present invention.

Suitable polyols are, e.g., polyesterpolyols with a molecular weight of about 300 to about 10000, which are obtainable by polycondensation of polyfunctional carboxylic acids and polyfunctional alcohols according to known procedures. Further suitable polyols are polyetherpolyols, especially polyetherpolyols with a molecular weight of about 200 to about 5000, as obtainable by polyaddition of alkyleneoxides with 2 to 8 C-Atoms as ethyleneoxide or propyleneoxide or butyleneoxide to polyfunctional, preferably bifunctional starter molecules as ethyleneglycol and the like. Especially suitable polyols are, e.g., polyethyleneglycol, polypropyleneglycol, polytetramethyleneoxide.

Suitable polyamines are, e.g., polyetheramines, especially polyetheramines with a molecular weight of about 200 to about 5000, as obtainable by polyaddition of alkyleneoxides with 2 to 8 C-Atoms as ethyleneoxide or propyleneoxide or butyleneoxide to polyfunctional, preferably bifunctional starter molecules as ethyleneglycol and the like and functionalization of the end group with a suitable amine, as known by the skilled person. Especially suitable polyols are commercially available under the trade name Jeffamine®, from Huntsman Chemical. Further suitable polyamines are polyethyleneimines or polyaminoamides (e.g. versamide, Cognis Germany).

If a composition according to the present invention contains monomers A and monomers B and monomers according to formula I, the weight relation of the consitiuents should be chosen as to fulfill the relation of 1 - 5 (type A) : 1 - 3 (type B) : 1 (formula I). In a preferred embodiment of the present invention, the weight of the monomers in the composition fulfills the relation of 1 - 3 (type A) : 1 - 2 (type B) : 1 (formula I).

If a composition according to the present invention contains monomers it contains monomers of the type A and monomers of the type B, it should contain them in such a relation that the molar ratio of functional groups in monomers of the type A and functional groups in monomers of the type B is in the range of about 0,5 to 2,0, preferably from about 0,8 to about 1,5 and especially preferred from about 0,8 to 1,2.

The present invention also relates to a method for the preparation of polymers or polymer mixtures from compositions according to the present invention. The term "polymers or polymer mixtures" in the context of the present text relates to the product of the polymerization of a monomer mixture according to the present invention, regardless whether such a product contains only one type of polymer or a mixture of two or more different polymer types. -Within a "polymer type", one polymer differs from another only with regard to molecular weight or, in case of random copolymers, in the succession of monomer types in the polymer chain.

For the preparation of such polymers or polymer mixtures, the monomers contained in a composition according to the present invention are anionically or cationically polymerized.

The polymerization can be conducted in a solvent or as a bulk polymerization, depending on the type of monomers or the type of polymers formed after the reaction.

Suitable solvents are polar or non-polar organic solvents, preferably polar organic solvents . Examples for suitable organic non halogenated solvents are toluene, dimethylformamide (DMF), xylene, ethyl acetate, acetone or tetrahydro furane (THF).

Suitable organic halogenated are solvents like chlorobenzene, dichlorobenzene, chloromethane, dichloromethane, chloroform or 1,1,1-trichloro ethane.

In the case of anionic polymerization, the following solvents have proved to be especially suited: toluene, dimethylformamide or THF.

In the case of cationic polymerization, the following solvents have proved to be especially suited: chlorobenzene, dichloromethane or trichloromethane.

In a preferred embodiment of the present invention, the polymerization is performed essentially in the absence of solvents. The solvent content of the reaction mixture is especially below 10 % by weight, preferably below 5 or below 2 % by weight.

The polymerization, regardless of the polymerization type, is usually conducted at temperatures of from about 30 to about 130 °C. If the polymerization is performed anionically, however, the polymerization temperature is preferably chosen to be between about 50 and about 95 °C, especially between about 70 and about 85 °C.

The polymerization of monomers according to the general formula I or of monomers, oligomers or polymers which have functional groups according to the functional groups according to the general formula II can be initiated anionically or cationically.

As anionic initiators generally all organic bases are suitable.

Preferable organic bases are DBU, DABCO, quinuclidine, DMAP, aniline, pyridine, triethylamine, N,N-dimethylaniline or N,N-dimethyl toluidine.

The cationic polymerization is preferably conducted with cationic initiators that allow the polymerization to be initiated thermally or photochemically.

Suitable cationic initiators are e.g. trifluoro methanesulfonic acid or boron trifluoride etherate.

Also suitable as cationic initiators are onium borates of an element from groups 15 to 17 of the periodic classification [Chem. & Eng. News, Vol. 63, No. 5, 26; 4 February 1985] or borates of an organometallic complex of an element from groups 4 to 10 of the periodic classification (same reference), wherein the cationic entity is chosen from:
1) - the onium salts of formula IV

   [(R¹)ₙ-A-(R²)ₘ]⁺ (IV)

   in which formula:
   - A represents an element from groups 15 to 17 chosen from I, S and Se,
   - R¹ represents a C6-C20 heterocyclic or carbocyclic aryl radical, it being possible for the said heterocyclic radical to contain, as hetero-elements, nitrogen or sulphur,
   - R² represents R¹ or a linear or branched, C1-C30 alkenyl or alkyl radical, the said radicals R¹ and R² optionally being substituted by a CI-C25 alkoxy, C1-C25 alkyl, nitro, chloro, bromo, cyano, carboxyl, ester or mercapto group,
   - n is an integer ranging from 1 to v+1, v being the valency of the element A,
   - m is an integer ranging from 0 to v-1 with n+m = v+1;
2) - the oxoisothiochromanium salts of formulaV: 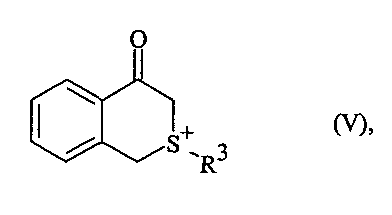 where the radical R³ represents a linear or branched, C₁-C₂₀ alkyl radical;
3) - the organometallic salts of formula V

   (L¹L²L³M)_{q}⁺ (V)
in which formula:
- M represents a metal from group 4 to 10 selected from iron, manganese, chromium and cobalt,
- L1 represents 1 ligand joined to the metal M via π electrons, the ligand being chosen from the η³-alkyl, η⁵-cyclopentadienyl and η⁷-cycloheptatrienyl ligands and the η⁶-aromatic compounds chosen from the optionally substituted η⁶-benzene ligands and the compounds having from 2 to 4 condensed rings, each ring being capable of contributing to the valency layer of the metal M via 3 to 8 π electrons;
- L² represents 1 ligand joined to the metal M via π electrons, the ligand being chosen from the η⁷-cycloheptatrienyl ligands and the η⁶-aromatic compounds chosen from the optionally substituted η⁶-benzene ligands and the compounds having from 2 to 4 condensed rings, each ring being capable of contributing to the valency layer of the metal M via 6 or 7 π electrons;
- L³ represents from 0 to 3 identical or different ligands joined to the metal M via π electrons, the ligand(s) being chosen from CO and NO₂⁺;
the total electron charge q of the complex to which L¹, L² and L³ and the ionic charge of the metal M contribute being positive and equal to 1 or 2; and in that the anionic borate entity has the formula:

[BXₐR_{b}]⁻

in which formula:
- a and b are integers ranging from 0 to 4 with a + b = 4,
- the symbols X represent:
   a halogen atom (chlorine or fluorine) with a = 0 to 3, an OH functional group with a = 0 to 2,
- the symbols R are identical or different and represent:
   - a phenyl radical substituted by at least one electron-withdrawing group chosen from CF₃, NO₂ or CN or by at least 2 fluorine atoms, when the cationic entity is an onium of an element from groups 15 to 17,
   - a phenyl radical substituted by at least one electron-withdrawing group or element chosen from a fluorine atom, CF₃, NO₂ or CN, when the cationic entity is an organometallic complex of an element from groups 4 to 10,
   - an aryl radical containing at least two aromatic rings, optionally substituted by at least one electron-withdrawing group or element chosen from a fluorine atom, CF₃, NO₂ or CN, whatever the cationic entity.

Also suitable cationic initiators are UV-initiatable aromatic sulfonium salts, preferably unsubstituted or phenylthio substituted triaryl sulfonium hexafluorophosphate or antimonate.

An overview of suitable initiators for cationic polymerization of thiocarbonate resins is given by R. S. Davidson in Journal of Photochem. Photobiol. A; Chem, 73 (1993) pp. 81 to 96.

In a preferred embodiment of the present invention, the polymerization of a composition according to the present invention is performed anionically with thermal initiation. It is, of course, dependant on the type of monomers in the composition which initiator is used to initiate the polymerization or if no additional initiator has to be added at all. It is a further preferred option of the present invention to use a type B monomer as a part of a composition according to the present invention which has a functional group allowing for a "self initiation" of the composition. Especially type B monomers with an amine functionality are able to initiate the copolymerization of monomers of the formula I within the composition.

Copolymers obtainable from compositions according to the present invention have utility as adhesives, sealants, composites and in other applications. Notably, the lack of volume contraction and a slight expansion during polymerization make the compositions particularly useful in applications for adhesives, sealants, fillings, precision castings, and strain-free composite matrix resins.

The compositions according to the present invention can contain additional substances like fillers, pigments, stabilizers, adhesion promoters, dyes, corrosion inhibitors and the like.

Filler particles can optionally be blended with the compositions according to the present invention. The filler particles can be made of any suitable material but typically are inorganic in nature. Among the properties to be considered in selecting a filler are desired filler volume level, particle size, particle size distribution, index of refraction and hardness. Silicone dioxide is one example of a suitable filler. The filler particles can be produced by grinding or milling a material such as quartz or glass to an acceptable size, such as from 0.02 µm to 100 µm. A range of particles sizes is typically used to increase the amount of loading of filler material in the resin matrix.

The amount of filler which can be added to the copolymer composition is dependent upon the total surface area of the filler particles. If colloidal size particles in the range of 0.02 to 0.04 µm are used, addition of a little as 5% by weight of the particles will be sufficient to modify the viscosity of the copolymer. Desirably, the filler can be present in an amount of between 20% and 80% by weight.

The present invention also relates to a polymer or polymer mixture obtainable through polymerization of a composition according to the present invention.

The present invention also relates to a method for the preparation of a polymer or polymer mixture wherein a composition according to the present invention is polymerized.

The present invention also relates to the use of a polymer or polymer mixture according to the invention or a polymer prepared according to a method of the present invention or of a composition according to the present invention as an adhesive, as a sealant, for surface protection or as a filler.

The invention will now be explained in further detail by way of examples.

### EXPERIMENTAL

### Materials

Thiophosgene and trifluoromethanesulfonic acid (TfOH) (Tokyo Kasei Kogyo Co., Inc.) were commercially available and used as received. Pyridine, boron trifluoride etherate (BF₃, OEt₂), methyl trifluoromethanesulfonate (TfOMe) (Kanto Chemical Co., Inc.), triethylamine (TEA) (Tokyo Kasei Kogyo Co., Inc.), dichloromethane were distilled over CaH₂ before use. Tetrahydrofuran (THF) was distilled from sodium. 10%-Palladium on charcoal was purchased from Aldrich Chemical Co., Inc. and used as received.

### Measurements

Melting points (mp) were measured on a Yanaco micro melting point apparatus. ¹H and ¹³C NMR spectra were recorded on a Varian INOVA-500 spectrometers (500 MHz for ¹H and 125 MHz for ¹³C NMR) in deuterated chloroform at ambient temperature, using tetramethylsilane (TMS) as internal standard. Number-average (*M*_{*n*}) and weight-average (*M*_{*w*}) molecular weights were determined by size-exclusion chromatography (SEC) using a Tosoh DP-8020 pump, a Viscotek TDA MODEL-300 refractive index (RI) detector and polystyrene gel columns (Tosoh TSK gels G2500H, G3000H, G4000H and GMH) in THF using a calibration curve of polystyrene standards. Infrared (IR) spectra were measured on a Horiba FT-210 spectrometer.

The tensile shear strength was measured using a "Zwick Baureihe 1400" electronic measuring device for tensile strength, measuring speed: 15 mm/min, force receiver 10 kN.

The bonding properties were investigated by bonding cleaned but otherwise untreated DIN 1541 steel sheets with a size of 10 x 2,5 x 0,15 cm.

The adhesion area was 2,5 x 1,0 cm, reproducibility was ensured by fixation of the steel sheets in a stencil.

### Preparation of the compounds:

### 5-Norbornene-2,2-dimethanol

5-Norbornene-2,2-dimethanol was by mixing 90 g of 5-norbomene-2-carboxyaldehyde (Tokyo Kasei Kogyo Co., Inc.), 147 g formaldehyde and 300 ml methanol and adding 118 ml of KOH (45,3 % in water) dropwise. The reaction mixture was stirres under reflux conditions for 5 h and the solvent was removed under reduced pressure. The product was washed with demineralised water and recrystallized from demineralised water. This yielded 99,6 g (88 % of the theoretical value) of a white crystalline compound with an mp of 115 °C.

### 5,5-(Bicyclo[2.2.1]hept-2-ene-5,5-ylidene)-1,3-dioxane-2-one (M1)

21,3 g 5-Norbornene-2,2-dimethanol were added to 300 ml Toluene and 39,1 g butyl ester of chloroformic acid were added dropwise fast. After 15 minutes, Triethylamine was added dropwise without the temperature in the reaction mixture leaving a temperature corridor of 25 to 45 °C. After completion of the addition, the mixture was stirred at ambient temperature (23 °C) for 2 hours. On addition of 250 ml water a 2 phased product mixture was formed. The upper phase was separated, dried over MgSO₄ and the solvent was evaporated under vacuum.

27 g of raw product were obtained. Recrystallization from toluene yielded 17 g of white crystals with a mp of 88 - 92 °C (70 % of the theoretical value).

### 5,5-(Bicyclo[2.2.1]hept-2-ene-5,5-ylidene)-1,3-dioxane-2-thione (M2)

Under a dry nitrogen atmosphere, 70 ml of dry THF was stirred at 50°C. To this solvent was added dropwise 1.00 g (6.50 mmol) of 5-norbornene-2,2-dimethanol and 1.05 ml (13.0 mmol) of pyridine dissolved in 15 ml of dry THF and 0.25 ml (6.50 mmol) of thiophosgene dissolved in 15 ml of dry THF at the same period. The reaction mixture was stirred at 50°C for 12 h. Then the reaction mixture was filtered and the filtrate was concentrated under reduced pressure. The residue was purified by silica gel chromatography with the mixed solvent of ethyl acetate/hexane (vol. ratio 1/1) as eluent. Finally, recrystallization from ethyl acetate/hexane afforded 5,5-(bicyclo[2.2.1]hept-2-ene-5,5-ylidene)-1,3-dioxane-2-thione as colourless crystal with the yield of 1.65 g (35%). mp, 153-156°C.
¹H NMR (CDCl₃. 500 MHz): δ 6.15-6.34 (m, 2H, -CH=CH-), 4.07-4.50 (m, 4H, O-CH₂-), 2.99 (s, 1 H, -CH-), 2.89 (s, 1H, -CH-), 1.52-1.69 (m, 2H, CH₂), 1.03-1.09 (m, 2H, CH₂). ¹³C NMR (CDCl₃, 125 MHz): δ 190.0 (-O-C(=S)-O-), 138.9 (-CH=), 133.1 (-CH=), 78.7 (-O-CH₂-), 75.7 (-O-CH₂-), 47.3 (-CH₂-), 45.4 (-CH-), 42.0 (-CH-), 40.1 (quaternary carbon), 34.1 (-CH₂-). IR (KBr, cm⁻¹): 1265 (>C=S). Anal. Calcd. for C₁₀H₁₂O₂S: C, 61.09; H, 6.16; S, 16.34. Found: C, 60.89; H, 6.25; S, 16.14.

Momoner M3 was obtained through known processes by reacting phenyl glycidyl ether with carbon disulfide as described e.g. in US 6,160,644.

### Application tests: adhesives with expanding monomers

The following monomers 5,5-(bicyclo[2.2.1]hept-5-en-2,2-ylidene)-1,3-dioxane-2-one (1), 5,5-(bicyclo[2.2.1]hept-5-en-2,2-ylidene)-1,3-dioxane-2-thione (2) and phenolmethyldithiocarbonate (3) 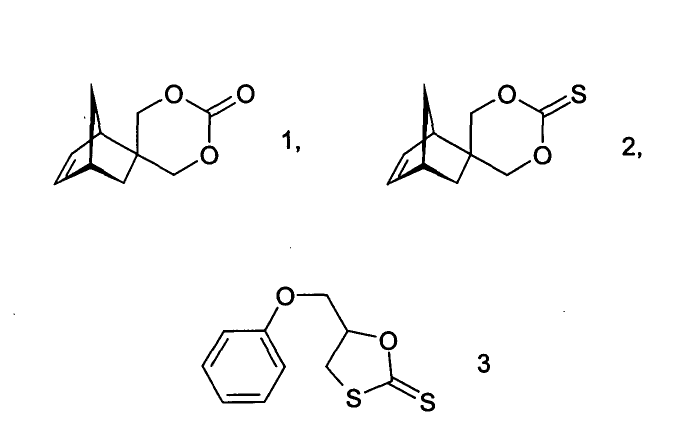 were used for illustrating the invention (2) and as comparative compounds (1 and 3).

As a reference adhesives system an established standard system consisting of 38 wt-% aminopolyether (Jeffamine® D400, obtainable through Huntsman Chemical Company) and 62 wt-% epoxide (D.E.R. 331 P, obtainable through Dow Chemical) with a relation of amino hydrogen to epoxy groups of 1:1 was used.

The above mentioned compounds 1, 2 and 3 were included in the reference system in a weight relation of 3:2:1 (aminopolyether : epoxide : compound 1, 2 or 3), respectively.

The testing of adhesion and curing was performed according to the above mentioned testing procedure.

### Preparation of the tested adhesives:

D.E.R: 331 P and one of the expanding monomer compounds 1, 2 and 3 were mixed and homogenized by slightly heating the mixture (max. 60 °C). Jeffamine D 400 was added, the mixture was homogenized and stored at ambient temperature (23 °C) for 24 hours.

For testing the density of the adhesives before and after curing, 25 cm³ and 50 cm³ pyknometers according to DIN were used. At the beginning of the testing procedure, the weight of the pyknometers was determined on an analysis grade scale (Sartorius AC2115). In a second step, the weight of the pyknometers was determined after a completely filling the pyknometer with bubble free Baysilone M 350 (high viscosity silicon oil, Bayer AG, Germany). For determination of the density of the uncured adhesives, approximately 2.5 g of the uncured adhesive as described above were introduced into the pyknometer and the weight of the filled pyknometer was accurately determined. The pyknometer was then completely filled with the above mentioned silicone oil (bubble free) and again the weight of the pyknometer was taken. The same procedure was repeated for the cured adhesive samples.

The following results were obtained for an adhesive with component M2 as described above and are included as an example of how to measure the density change:

| pyk-nometer weight (PW) [g] | PW + solvent [g] | Amount of uncured resin (UCR) [g] | PW + solvent + UCR [g] | Density of UCR [g/cm³] | Amount of cured resin (CR) [g] | PW + solvent+ CR [g] | Density of CR [g/cm³] |
|---|---|---|---|---|---|---|---|
| 36,2908 | 84,0690 | 2,5502 | 84,4530 | 1,1794 | 1,9299 | 84,3101 | 1,1085 |

The relation of the above-mentioned densities results in an expansion (Δ %) of + 6,12.

For bonding tests, the above described steel plates were coated with a thin layer of the adhesive, fixed with a clothespin, left at ambient temperature for 1,5 hours and cured at 120 °C for 1 hour.

The tensile shear strength of the cured samples was determined after storage
a) for 24 hours under ambient laboratory conditions
b) for 7 days under ambient laboratory conditions
c) under cataplasma conditions.

For storage under cataplasma conditions, the cured samples were stored for 7 days under ambient laboratory conditions. Afterwards, the samples were completely wrapped in cellulose sheets, which were soaked with demineralised water. The so prepared samples were completely and tightly wrapped in aluminium foil, placed into heat proof plastic containers and sealed airtight. The containers were then stored at 70 °C for 1 week, cooled to ambient temperature, stored at - 18 °C for 16 hours and defrosted to ambient temperature. Immediately afterwards, the sampled were unwrapped and the tensile shear strength was measured.

The following table lists the detailed results for the measurement of tensile shear strength, expansion behaviour and breaking behaviour of the adhesive bond.

**Table 1**

| Probe | Reference | M1 | M2 | M3 |
|---|---|---|---|---|
| TSS after curing [N/mm²] | 17,9 | 12,3 | 14,3 | 12,0 |
| TSS after storage at room temperature for 1 week [N/mm²] | 18,7 | 11,6 | 15,7 | 12,2 |
| TSS after storage under cata-plasma conditions (1 week) [N/mm²] | 4,6 | 4,9 | 8,0 | 7,6 |
| Analysis of breaking behaviour | AB/CB | AB/CB | CB | CB |
| Expansion behaviour [Δ %] | -3 | -1,9 | +6 | +2,3 |
| Curing behaviour Tₒₙₛₑₜ in DSC [°C] | 83 | 70 | 80 | 104 |
| Curing behaviour Tₘₐₓ in DSC [°C] | 135 | 129 | 122 | 143 |
| T_{g} of the cured system [°C] | 49 | 25 | 22 | 26 |
| T_{g} = glass transition temperature | | | | |
| AB = adhesive breaking | | | | |
| KB = cohesive breaking | | | | |

## Claims

1. Curable composition, containing at least one monomer type A or two monomer types A and B which are polymerizable by polyaddition and at least one monomer of the general formula I 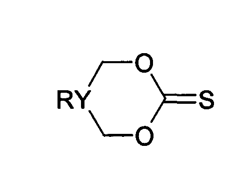 where RY is a substituted or unsubstituted mono- or polycyclic saturated or unsaturated or aromatic hydrocarbon and Y is a spiro carbon atom being part of the mono- or polycyclic hydrocarbon structure, or a mixture of two or more different monomers of the general formula I.

2. Composition according to claim 1, **characterized in that** RY is a substituted or unsubstituted norbornene or norbomane.

3. Composition according to claim 1 or 2, **characterized in that** its bulk density after polymerization is higher than the bulk density of its monomer or mixture of two or more monomers by more than 2,5 %.

4. Composition according to one of the claims claim 1 to 3, **characterized in that** it contains at least one epoxide as a monomer of the type A.

5. Composition according to one of the claims claim 1 to 4, **characterized in that** it contains at least one polyamine as a monomer of the type B.

6. Composition according to one of the claims claim 1 to 5, **characterized in that** it contains monomers A and monomers B and monomers according to formula I in a relation of 1 - 5 : 1 - 3 : 1.

7. Composition according to one of the claims claim 1 to 5, **characterized in that** it contains monomers A and monomers B in such a relation that the molar ratio of functional groups in monomers A and functional groups in monomers B is 0,5 - 2,0, preferably 0,8 - 1,5.

8. Method for the preparation of a composition according to one of the claims 1 to 7, wherein at least one monomer A and at least one monomer B which are polymerizable by polyaddition and at least one monomer according to the general formula I 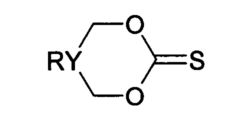 where RY is a substituted or unsubstituted mono- or polycyclic saturated or unsaturated or aromatic hydrocarbon and Y is a spiro carbon atom being part of the mono- or polycyclic hydrocarbon structure, or a mixture of two or more monomers according to the general formula I, are mixed.

9. Method for the preparation of a polymer mixture, wherein at least one monomer A and at least one monomer B which are polymerizable by polyaddition and at least one monomer according to the general formula I 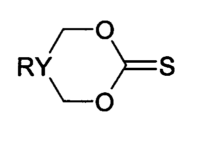 where RY is a substituted or unsubstituted mono- or polycyclic saturated or unsaturated or aromatic hydrocarbon and Y is a spiro carbon atom being part of the mono- or polycyclic hydrocarbon structure, or a mixture of two or more monomers according to the general formula I, are polymerized thermally, anionically or cationically.

10. Method according to claim 9, **characterized in that** the polymerization is conducted with or without a solvent.

11. Method for the preparation of a hardened resin wherein a composition according to claim 10 or 11 is anionically or cationically polymerized.

12. Use of a Polymer according to one of the claims 1 to 3 or a polymer prepared according to a method of one of the claims 4 to 6 or of a composition according to one of the claims 10 or 11 as an adhesive, as a sealant, for surface protection or as a filler.
